# DEMANDE DE BREVET EUROPEEN

(11) **EP 0 933 858 A1**
(43) Date de publication de la demande: **04.08.1999**
(21) Numéro de dépôt: 98870017.5
(22) Date de dépôt: 28.01.1998
(51) Int. Cl.: H02H 7/122

(54) **Procédé de protection par mise en court-circuit**

(71) Demandeur: GEC ALSTHOM ACEC TRANSPORT S.A., 6001 Charleroi (BE)
(72) Inventeur: Masselus, Jean-Emmanuel, 6032 Mont-Sur-Marchienne (BE); Colasse, Alexis, 5100 Jambes (BE); Bodson, Jean-Marie, 1300 Wavre (BE)
(74) Mandataire: Van Malderen, Joelle

(57) **Abrégé**

La présente invention concerne un procédé de protection par mise en court-circuit de toutes les phases d'un moteur asynchrone commandé par un onduleur de tension à deux niveaux ou multi-niveaux, caractérisé en ce que l'on court-circuite uniquement l'une ou l'autre moitié de l'onduleur, en portant toutes les phases de l'onduleur soit au point haut de l'onduleur, soit au point bas de cet onduleur, ceci sans provoquer de court-circuit de son entrée.

## Description

### Objet de l'invention

La présente invention vise à proposer un procédé de protection par mise en court-circuit d'une ou plusieurs phases d'un moteur synchrone ou asynchrone commandé par un onduleur.

La présente invention se rapporte également au dispositif destiné à la mise en oeuvre dudit procédé.

### Etat de la technique

Les onduleurs, et plus particulièrement les onduleurs de tension, sont destinés à fournir une tension alternative à partir d'une tension continue.

Un domaine d'application particulièrement important est la commande en vitesse variable de machines synchrones ou asynchrones.

Dans ce cas, il est nécessaire de fournir à la charge, qui peut être représentée par chaque phase d'un moteur synchrone ou asynchrone, un système triphasé en tension le plus proche possible d'un système triphasé sinusoïdal équilibré variable en fréquence et en amplitude. L'onduleur de tension est un dispositif qui permet d'atteindre ce but, et qui utilise en général des montages de composants de puissance tels que des thyristors, des GTO, etc.

Depuis quelque temps sont apparus de nouveaux types d'interrupteurs statiques qui peuvent être définis sous le vocable "IGBT" (Insulated Gate Bipolar Transistor). Ces dispositifs sont des composants contrôlables, en ce sens que l'on peut à tout moment imposer le courant que l'on veut dans l'interrupteur en ajustant la tension sur sa grille de commande, tandis que pour les interrupteurs de l'ancienne génération représentés par exemple par les GTO ou similaires, on peut uniquement décider du moment de leur allumage et du moment de leur extinction.

La présente invention se rapporte tant aux onduleurs comprenant des composants de puissance classiques tels que des thyristors ou des GTO que des composants de puissance de la nouvelle génération tels que des IGBT ou même des transistors bipolaires.

Dans le cas particulier d'une mise en court-circuit d'un moteur asynchrone, il est connu notamment par le document SU-1350783 d'effectuer la mise en court-circuit simultanée sur toutes les phases d'un moteur. Ceci peut se produire en cas de défaut interne de l'onduleur. Dans ce cas, il est nécessaire de réaliser un court-circuit triphasé symétrique du moteur asynchrone de manière à ne pas solliciter exagérément la transmission mécanique par des surcouples engendrés par des courts-circuits asymétriques.

La solution la plus simple consiste à allumer simultanément tous les semi-conducteurs de l'onduleur entraînant ainsi la mise en court-circuit du condensateur d'entrée de l'onduleur. Cependant, dans ce cas, les semi-conducteurs doivent être dimensionnés pour pouvoir supporter le courant de court-circuit du condensateur de tête en plus du courant de court-circuit du moteur.

### Buts de l'invention

La présente invention vise à proposer un procédé de protection d'une chaîne de traction, asynchrone par exemple, équipée d'un onduleur de puissance, lui-même formé à partir d'interrupteurs statiques constitués de semi-conducteurs, et qui résout le problème de tenue en courant desdits semi-conducteurs.

Cette solution doit être applicable tant aux semi-conducteurs classiques de type thyristors ou GTO qu'à ceux de la nouvelle génération tels que des IGBT.

### Principaux éléments caractéristiques de l'invention

La présente invention vise à proposer un procédé qui permette de réaliser un court-circuit triphasé symétrique à la sortie d'un onduleur de tension sans provoquer de court-circuit sur l'entrée de cet onduleur.

Plus précisément, la présente invention vise à proposer un procédé de protection par mise en court-circuit d'un moteur asynchrone commandé par un onduleur de tension à deux niveaux ou multi-niveaux, caractérisé en ce que l'on court-circuite uniquement l'une ou l'autre moitié de l'onduleur éventuellement en fonction de la localisation physique d'un défaut.

La présente invention vise donc à proposer un procédé de protection dans lequel on relie toutes les phases de l'onduleur de tension en permanence au point haut ou au point bas de l'onduleur, en provoquant un court-circuit triphasé symétrique à la sortie de cet onduleur sans provoquer de court-circuit sur son entrée après détection et localisation d'un défaut.

### Brève description des figures

- Les figures 1, 2 et 3: représentent les différentes étapes du procédé de l'invention dans le cas d'un onduleur à deux niveaux relié aux trois phases d'un moteur asynchrone.
- Les figures 4, 5 et 6: représentent les différentes étapes du procédé de l'invention dans le cas d'un onduleur à trois niveaux relié aux trois phases d'un moteur asynchrone.

### Description détaillée de plusieurs formes d'exécution de la présente invention

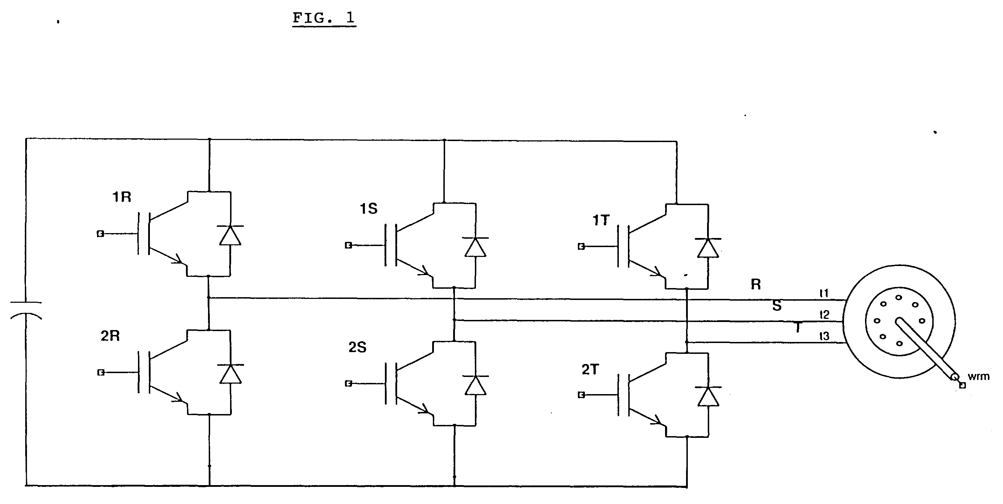

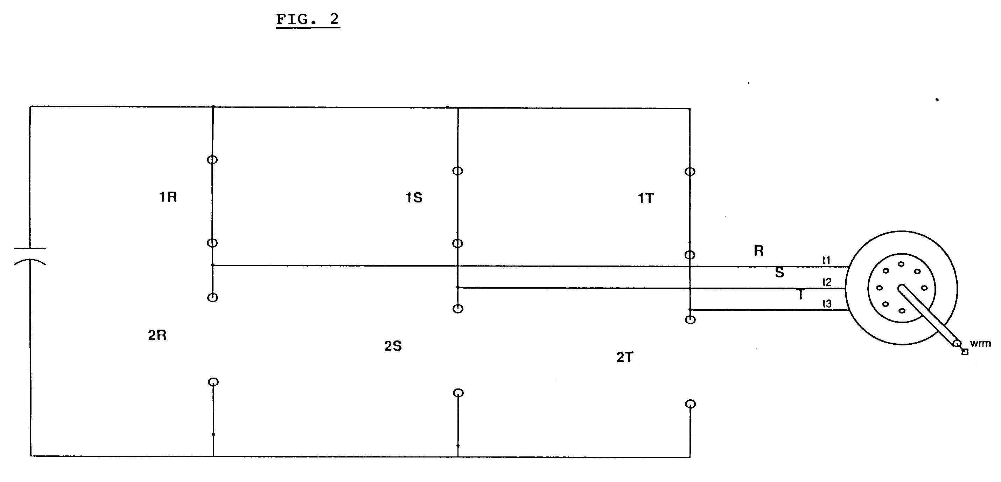

La figure 1 représente schématiquement un onduleur à deux niveaux relié aux trois phases moteur R, S et T d'un moteur asynchrone M.

Cette figure représente de manière schématique les trois branches d'un onduleur conventionnel à deux niveaux qui est utilisé dans le cadre de la présente invention. De manière classique, chaque branche de cet onduleur comprend deux interrupteurs I1 (R, S, T) ou I2 (R, S, T), qui alimentent alternativement une charge qui est représentée par une phase du moteur asynchrone M.

Dans ce cas particulier, la charge est de type selfique, et il est nécessaire que les deux interrupteurs de chaque branche soient montés en parallèle avec une diode que l'on appelle "diode de roue libre" (D1 ou D2), qui permet au courant de charge de circuler lorsque l'interrupteur correspondant est ouvert. La présence de cette diode permet au courant de charge inductif de décroître et d'éviter ainsi toute surtension destructive lorsque l'interrupteur correspondant est ouvert.

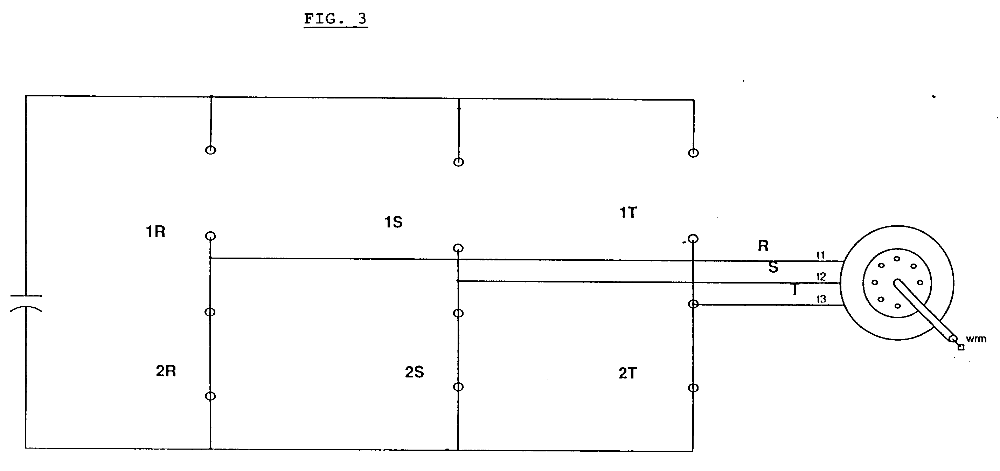

Les figures 2 et 3 représentent de manière schématique la mise en court-circuit d'une seule des deux parties de l'onduleur.

Plus particulièrement, dans la figure 2, la partie supérieure de l'onduleur est mise en court-circuit. Dans ce cas, l'électronique de commande envoie des ordres d'ouverture aux interrupteurs I2R, I2S et I2T, et des ordres d'allumage aux interrupteurs I1R, I1S et I1T. Les interrupteurs I1R, I1S et I1T étant reliés entre eux par leurs collecteurs (s'il s'agit d'IGBT ou de transistors bipolaires) ou par leur anode (s'il s'agit de GTO ou de thyristors), leur allumage simultané court-circuite entre elles les trois phases du moteur R, S et T. La tension du condensateur d'entrée C est reprise par les interrupteurs I2R, I2S et I2T.

Dans la figure 3, la partie inférieure de l'onduleur est mise en court-circuit. Dans ce cas, l'électronique de commande envoie des ordres d'ouverture aux interrupteurs I1R, I1S et I1T, et des ordres d'allumage aux interrupteurs I2R, I2S et I2T. Les interrupteurs I2R, I2S et I2T sont reliés entre eux par leurs émetteurs (s'il s'agit d'IGBT ou de transistors bipolaires) ou par leur anode (s'il s'agit de GTO ou de thyristors), leur allumage simultané court-circuite entre elles les trois phases du moteur R, S et T. La tension du condensateur d'entrée C est reprise par les interrupteurs I1R, I1S et I1T.

Lorsqu'un semi-conducteur est en court-circuit (défaillance d'un semi-conducteur) dans un onduleur à deux niveaux, la phase correspondante du moteur est reliée en permanence soit au point haut de l'onduleur (+), soit au point bas de ce dernier (-) à condition que le semi-conducteur situé sur la même branche soit bloqué, sinon c'est toute la branche qui est en court-circuit, ce qui revient à mettre l'entrée et les sorties de l'onduleur en court-circuit. A ce moment, le fait de bloquer le reste de l'onduleur en éteignant tous les semi-conducteurs sains va mettre le moteur dans une configuration électrique susceptible (cela dépend de l'instant du défaut) de générer un surcouple transitoire à l'arbre moteur, entraînant le bris de la transmission mécanique. La solution à ce problème est de provoquer un court-circuit triphasé symétrique aux bornes du moteur. Pour ce faire, plusieurs possibilités existent:
- allumer le semi-conducteur situé sur la même branche que le semi-conducteur en défaut, ce qui provoquera un court-circuit de la branche, entraînant généralement la destruction du semi-conducteur sain, donc de l'entrée de l'onduleur et de sa sortie également;
- allumer tous les semi-conducteurs de l'onduleur, ce qui peut permettre d'éviter la casse de semi-conducteurs GTO sains en répartissant plus équitablement les courants de défaut entre les branches de l'onduleur, mais pas la casse des semi-conducteurs comme des IGBT, tout en garantissant un court-circuit symétrique à la sortie de l'onduleur;
- allumer uniquement les semi-conducteurs reliés au point haut (+) ou au point bas (-) de l'onduleur suivant que la casse du semi-conducteur relie la phase correspondante en permanence respectivement au point haut (+)ou au point bas (-) de l'onduleur.

Cette troisième possibilité fait l'objet de la demande de brevet, et cette technique peut s'appliquer aux interrupteurs de type IGBT.

Dans le cas d'une utilisation d'interrupteurs de type IGBT (contrairement aux interrupteurs de type GTO), le reblocage est permis lors de l'allumage du semi-conducteur sur un court-circuit ou lorsqu'un court-circuit survient alors que l'IGBT était allumé. En effet, l'IGBT limite intrinsèquement son courant de collecteur à un courant de l'ordre de 3 à 6 fois son courant nominal. On appelle ce phénomène la "désaturation".

La détection de désaturation de l'IGBT permet de détecter un court-circuit, et se réalise par comparaison de la tension V_{ce} (collecteur - émetteur) aux bornes de l'IGBT avec une tension de référence générée en interne dans l'allumeur qui commande l'IGBT. Si la tension V_{ce} mesurée est supérieure à cette valeur de référence, l'allumeur le détecte et peut éventuellement rebloquer automatiquement l'IGBT dont l'allumage avait été commandé et éventuellement renvoyer un signal à l'électronique de commande, indiquant qu'un court-circuit a été détecté et la localisation de ce court-circuit.

Ceci permettra d'appliquer la stratégie de détection à un onduleur à deux niveaux sur électronique de commande. Supposons par exemple que cette électronique de commande reçoive l'information suivante : interrupteur 1R a été rebloqué par l'allumeur suite à une détection de désaturation. Ceci signifie que le court-circuit connecte la phase R au point bas de l'onduleur. L'action que prendra l'électronique de commande sera d'allumer les interrupteurs 2R, 2S et 2T.

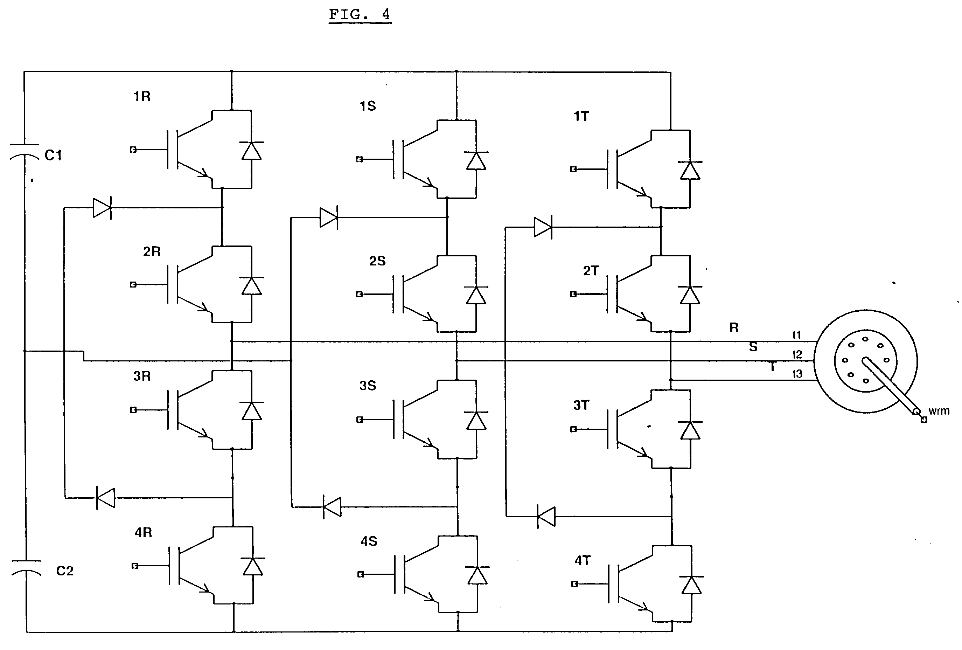

La figure 4 représente un onduleur à trois niveaux relié aux trois phases d'un moteur asynchrone. Chacune des trois branches de l'onduleur est composée de quatre interrupteurs I1, I2, I3 et I4 (R, S, T respectivement), qui sont allumés ou éteints 2 à 2 afin d'alimenter alternativement la charge constituée par la phase du moteur asynchrone.

A nouveau, sur chaque interrupteur est disposée une diode de roue libre D1 ou D2 afin de permettre au courant de circuler lorsque les interrupteurs correspondants sont ouverts.

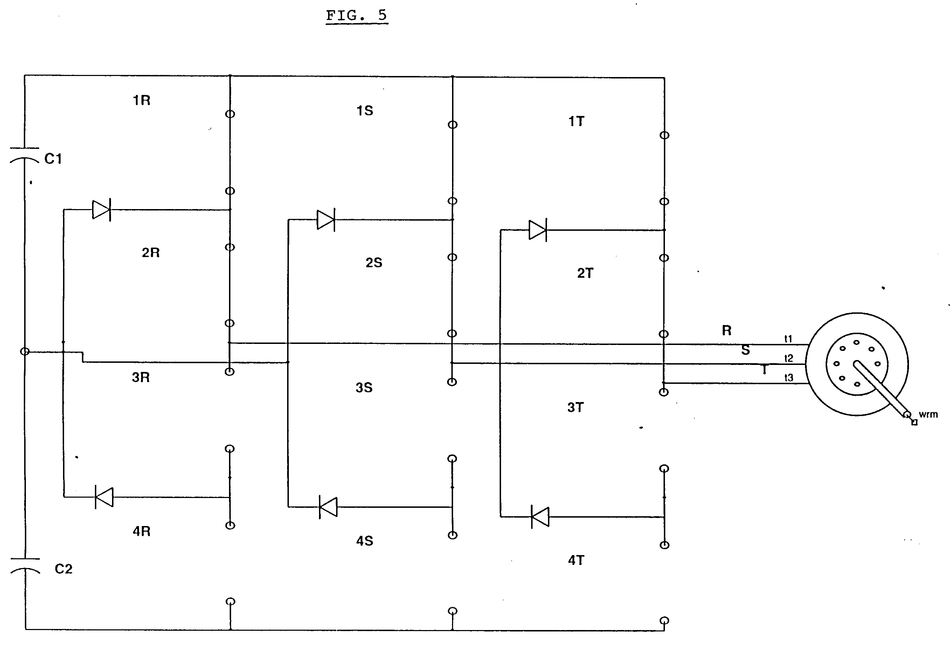

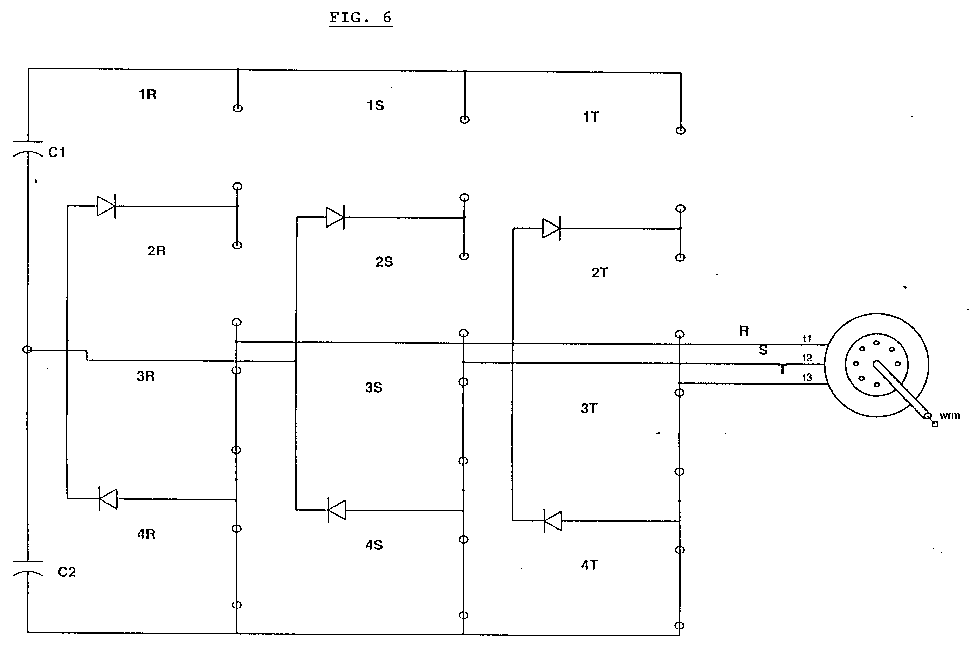

La figure 5 représente la mise en court-circuit de la partie supérieure de l'onduleur, tandis que la figure 6 représente la mise en court-circuit de la partie inférieure de l'onduleur.

Ainsi que représenté à la figure 5, les interrupteurs I1R, I1S et I1T étant reliés entre eux par leurs collecteurs (s'il s'agit d'IGBT ou de transistors bipolaires) ou par leur anode (s'il s'agit de GTO ou de thyristors, et leurs émetteurs respectifs (s'il s'agit d'IGBT ou de transistors bipolaires) ou leur cathode (s'il s'agit de GTO ou de thyristors) étant reliés aux interrupteurs I2R, I2S et I2T, le fait d'allumer les interrupteurs I1R, I1S, I1T, I2R, I2S et I2T court-circuite entre elles les trois phases moteur R, S et T. La tension des condensateurs d'entrée est reprise par les interrupteurs I3R, I3S, I3T, I4R, I4S et I4T.

Dans le cas de la mise en court-circuit de la partie inférieure, tel que représenté à la figure 6, les interrupteurs I4R, I4S et I4T étant reliés entre eux par leurs émetteurs (s'il s'agit d'IGBT ou de transistors bipolaires) ou par leur cathode (s'il s'agit de GTO ou de thyristors, et leurs collecteurs respectifs (s'il s'agit d'IGBT ou de transistors bipolaires) ou leur cathode (s"il s'agit de GTO ou de thyristors) étant reliés aux interrupteurs I3R, I3S et I3T, le fait d'allumer les interrupteurs I3R, I3S, I3T, I4R, I4S et I4T court-circuite entre elles les trois phases moteur R, S et T. La tension des condensateurs d'entrée est reprise par les interrupteurs I1R, I1S, I1T, I2R, I2S et I2T.

## Revendications

1. Procédé de protection par mise en court-circuit de toutes les phases d'un moteur asynchrone commandé par un onduleur de tension à deux niveaux ou multi-niveaux, caractérisé en ce que l'on court-circuite uniquement l'une ou l'autre moitié de l'onduleur, en portant toutes les phases de l'onduleur soit au point haut de l'onduleur, soit au point bas de cet onduleur, ceci sans provoquer de court-circuit de son entrée.

2. Procédé de protection par mise en court-circuit de toutes les phases d'un moteur asynchrone commandé par un onduleur de tension à deux niveaux ou multi-niveaux, caractérisé en ce que l'on court-circuite uniquement l'une ou l'autre moitié de l'onduleur, en portant toutes les phases de l'onduleur soit au point haut de l'onduleur, soit au point bas de cet onduleur, ceci sans provoquer de court-circuit de son entrée, en fonction de la localisation physique d'un défaut.

3. Procédé de protection selon la revendication 2, caractérisé en ce que l'on localise le défaut en utilisant le principe de la détection de désaturation de l'IGBT.
